# EUROPEAN PATENT APPLICATION

(11) **EP 4 776 639 A1**
(43) Date of publication of application: **15.07.2026**
(21) Application number: 23956169.9
(22) Date of filing: 17.10.2023
(51) Int. Cl.: H04N 21/8541, H04N 21/25, H04N 21/24, G06Q 50/10

(54) **ARTIFICIAL INTELLIGENCE SYSTEM AND OPERATING METHOD THEREOF**

(71) Applicant: LG Electronics Inc., Yeongdeungpo-gu Seoul 07336 (KR)
(72) Inventor: PARK, Dae Gun, Seoul 06772 (KR); HEO, Seung Hyun, Seoul 06772 (KR)
(74) Representative: Vossius & Partner Patentanwälte Rechtsanwälte mbB
(86) International application number: PCT/KR2023/016057
(87) International publication number: WO 2025/084447

(57) **Abstract**

An artificial intelligence system according to an embodiment of the present disclosure may include: a display device configured to receive a user input during playback of content, and to transmit the received user input and content information for the content to a first Artificial Intelligence (Al) server; the first Al server configured to obtain an analysis result of the user input, and to transmit the obtained analysis result and the content information to a second Al server; and a second artificial intelligence server configured to generate a prompt based on the analysis result and the content information, to transmit the generated prompt to a generative Al server, to receive a plurality of story contents from the generative Al server, and to transmit the received plurality of story contents to the first Al server.

## Description

### [Technical Field]

The present disclosure relates to an artificial intelligence system, and more particularly, to generating a story of content through user input.

### [Background Art]

Digital TV services using wired or wireless communication networks are becoming widespread. Digital TV services can provide various services that conventional analog broadcast services could not provide.

For example, IPTV (Internet Protocol Television) and smart TV services, which are types of digital TV services, provide interactivity that allows users to actively select the type of programs to watch, viewing time, and the like. IPTV and smart TV services may provide various additional services, such as Internet search, home shopping, and online games, based on such interactivity.

Recently, many technologies for generating stories using artificial intelligence have emerged.

Existing artificial intelligence systems generate stories based on text such as plot summaries, or edit highlight videos (e.g., sports highlights) based on entire videos, and provide the edited videos.

However, stories provided through existing artificial intelligence systems have a limitation in that they are generated through only one content type, namely, text or video.

In addition, existing artificial intelligence systems have not been able to provide a function of predicting the story of the next episode when generating a story.

### [Disclosure]

### [Technical Problem]

The present disclosure has an object of automatically generating a story of content based on video data and text data.

The present disclosure has an object of providing a modified version of a story of content generated with a simple utterance alone.

### [Technical Solution]

An artificial intelligence system according to an embodiment of the present disclosure includes: a display device configured to receive a user input during playback of content, and to transmit the received user input and content information for the content to a first Artificial Intelligence (AI) server; the first Al server configured to obtain an analysis result of the user input, and to transmit the obtained analysis result and the content information to a second AI server; and a second artificial intelligence server configured to generate a prompt based on the analysis result and the content information, to transmit the generated prompt to a generative Al server, to receive a plurality of story contents from the generative Al server, and to transmit the received plurality of story contents to the first Al server, wherein the first Al server transmits the plurality of story contents to the display device, and the display device is configured to output the plurality of story contents.

An operation method of an artificial intelligence system according to an embodiment of the present disclosure may include: receiving, by a display device, a user input during playback of content; transmitting, by the display device, the received user input and content information for the content to a first Artificial Intelligence (AI) server; obtaining, by the first Al server, an analysis result of the user input; transmitting, by the first Al server, the obtained analysis result and the content information to a second AI server; generating, by the second Al server, a prompt based on the analysis result and the content information; transmitting, by the second Al server, the generated prompt to a generative Al server; receiving, by the second Al server, a plurality of story contents from the generative Al server; transmitting, by the second Al server, the received plurality of story contents to the first Al server; transmitting, by the first Al server, the plurality of story contents to the display device; and outputting, by the display device, the plurality of story contents.

### [Advantageous Effects]

According to an embodiment of the present disclosure, a user can be provided with next-episode stories of content being watched with a simple utterance alone. Accordingly, the user can be provided with a broader range of next-episode story information, so that the user experience can be greatly enhanced.

According to an embodiment of the present disclosure, a user can be provided with content having a story in a desired direction with a simple feedback utterance alone, so that the user experience can be greatly enhanced.

### [Description of Drawings]

FIG. 1 is a block diagram illustrating a configuration of a display device according to an embodiment of the present disclosure.
FIG. 2 is a block diagram of a remote control device according to an embodiment of the present disclosure.
FIG. 3 is a view illustrating an actual configuration example of a remote control device according to an embodiment of the present disclosure.
FIG. 4 is a view illustrating an example of utilizing a remote control device according to an embodiment of the present disclosure.
FIG. 5 is a view illustrating an Artificial Intelligence (AI) server according to an embodiment of the present disclosure.
FIG. 6 is a ladder diagram for describing an operation method of an Al system according to an embodiment of the present disclosure.
FIG. 7 is a view for describing a process of generating a next-episode story of content being watched by a user according to an embodiment of the present disclosure.
FIG. 8 is a view for describing a configuration of an artificial intelligence system according to an embodiment of the present disclosure.
FIG. 9 is a view for describing a detailed structure of an artificial intelligence system according to another embodiment of the present disclosure.
FIG. 10 is a ladder diagram for describing a process of providing modified story content as user feedback is received after FIG. 6.
FIG. 11 is an embodiment for describing a process of providing modified story content according to user feedback.

### [Mode for Invention]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

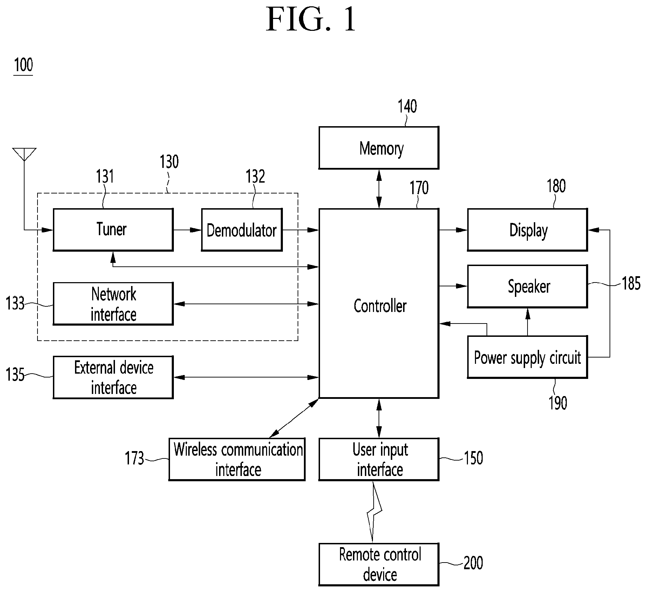

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list from an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller 170. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a settop box, a Blu-ray player, a DVD player, a game console, a sound bar, a smartphone, a PC, a USB memory, and a home theater system, but this is just exemplary.

The network interface 133 may provide an interface for connecting the display device 100 to a wired/wireless network including an internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the public, through the network.

The memory 140 may store signal-processed image, voice, or data signals stored by a program in order for each signal processing and control in the controller 170.

In addition, the memory 140 may perform a function for temporarily storing image, voice, or data signals input from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smartwatch, smart glass, and a head mounted display (HMD)) or a smartphone, which is capable of exchanging data (or inter-working) with the display device 100 according to the present disclosure. The wireless communication interface 173 may detect (or recognize) a wearable device capable of communication around the display device 100.

Furthermore, when the detected wearable device is a device authenticated to communicate with the display device 100 according to the present disclosure, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or OSD signals processed by the controller 170, or image signals or data signals received by the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, when necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of the display device according to an embodiment of the present disclosure described below may be performed by one of the display device 100 described with reference to FIG. 1, an image processing device such as the separated set-top box, or a content playback device including the display 180 and the speaker 185.

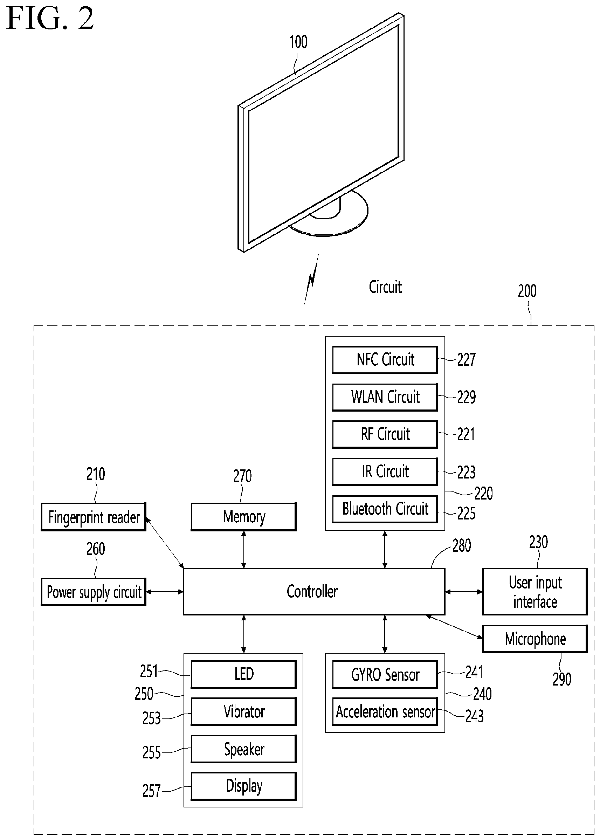

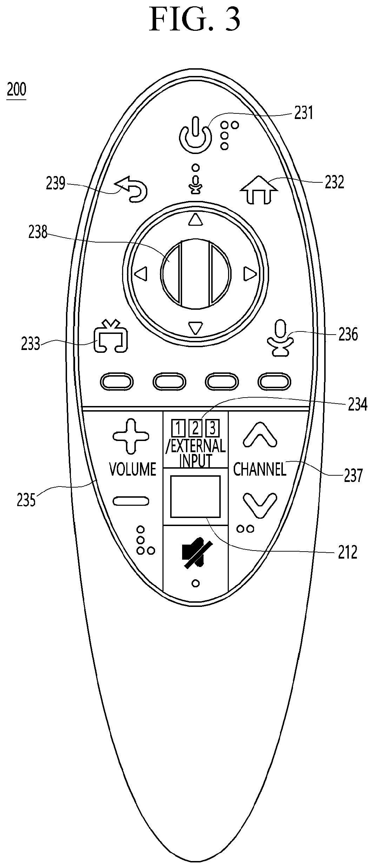

Next, a remote control device according to an embodiment of the present disclosure will be described with reference to FIGS. 2 and 3.

FIG. 2 is a block diagram of a remote control device according to an embodiment of the present disclosure, and FIG. 3 is a view illustrating an actual configuration example of the remote control device 200 according to an embodiment of the present disclosure.

First, referring to FIG. 2, a remote control device 200 may include a fingerprint recognition device 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 transmits/receives signals to/from any one of the display devices according to the above-described embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC (Near Field Communication) communication standard, and a WLAN circuit 229 capable of transmitting or receiving signals to or from the display device 100 according to a WLAN (Wireless LAN) communication standard.

In addition, the remote control device 200 transmits, to the display device 100 through the wireless communication circuit 220, a signal containing information on the movement of the remote control device 200.

Moreover, the remote control device 200 may receive signals transmitted from the display device 100 through the RF circuit 221 and, when necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. When the user input interface 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to one embodiment, the fingerprint recognition button 212 may be capable of a push operation, and may receive a push operation and a fingerprint recognition operation.

The power button 231 may be a button for turning on/off the power of the display device 100.

The home button 232 may be a button for moving to the home screen of the display device 100.

The live button 233 may be a button for displaying a live broadcast program.

The external input button 234 may be a button for receiving an external input connected to the display device 100.

The volume control button 235 may be a button for controlling the volume output from the display device 100.

The voice recognition button 236 may be a button for receiving a user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

When the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243, and the gyro sensor 241 may sense information on the movement of the remote control device 200.

For example, the gyro sensor 241 may sense information on an operation of the remote control device 200 on the basis of x, y, and z axes, and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or in response to signals transmitted from the display device 100.

A user may recognize whether the user input interface 230 is operated or whether the display device 100 is controlled through the output interface 250.

For example, the output interface 250 may include an LED 251 that is turned on when the user input interface 230 is operated or when signals are transmitted/received to/from the display device 100 through the wireless communication circuit 225, a vibrator 253 for generating vibration, a speaker 255 for outputting sound, or a display 257 for outputting an image.

In addition, the power supply circuit 260 supplies power to the remote control device 200, and when the remote control device 200 does not move for a predetermined time, stops the power supply, so that power waste can be reduced.

The power supply circuit 260 may resume the supply of power when a predetermined key provided at the remote control device 200 is operated.

The memory 270 may store various kinds of programs and application data required to control or operate the remote control device 200.

When the remote control device 200 transmits/receives signals wirelessly through the display device 100 and the RF circuit 221, the remote control device 200 and the display device 100 transmit/receive signals through a predetermined frequency band.

The controller 280 of the remote control device 200 may store, in the memory 270, information on a frequency band for transmitting/receiving signals to/from the display device 100 paired with the remote control device 200, and refer to the stored information.

The controller 280 controls general matters relating to the control of the remote control device 200. The controller 280 may transmit, to the display device 100 through the wireless communication circuit 225, a signal corresponding to a predetermined key operation of the user input interface 230 or a signal corresponding to the movement of the remote control device 200 sensed by the sensor 240.

In addition, the microphone 290 of the remote control device 200 may acquire voice.

A plurality of microphones 290 may be provided.

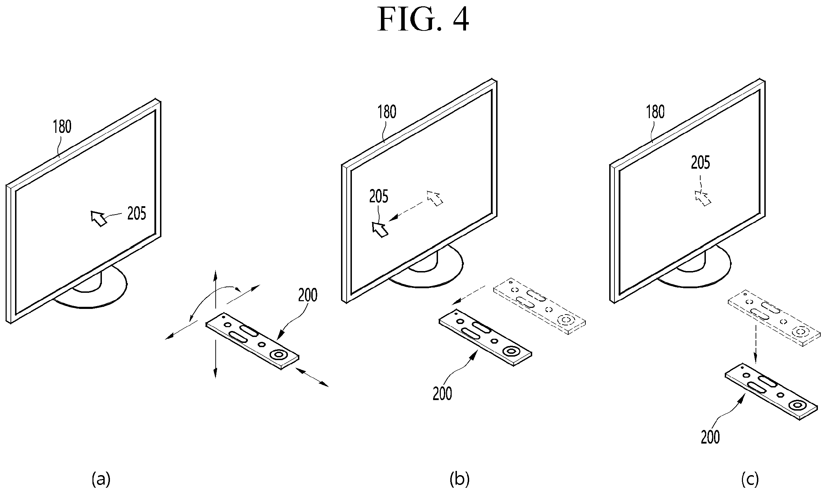

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as shown in the drawing, the remote control device 200 may be referred to as a spatial remote control device.

FIG. 4(b) illustrates that when a user moves the remote control device 200 to the left, the pointer 205 displayed on the display 180 of the display device 100 is also moved to the left in correspondence thereto.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates a case where, while a specific button in the remote control device 200 is pressed, a user moves the remote control device 200 away from the display 180. As a result, a selected region in the display 180 corresponding to the pointer 205 may be zoomed in and displayed in an enlarged size.

Conversely, when a user moves the remote control device 200 closer to the display 180, a selected region in the display 180 corresponding to the pointer 205 may be zoomed out and displayed in a reduced size.

On the other hand, when the remote control device 200 is moved away from the display 180, the selected region may be zoomed out, and when the remote control device 200 is moved closer to the display 180, the selected region may be zoomed in.

In addition, when a specific button in the remote control device 200 is pressed, recognition of upward, downward, leftward, and rightward movements may be excluded. In other words, when the remote control device 200 is moved away from or closer to the display 180, up, down, left, and right movements may not be recognized, and only the back-and-forth movement may be recognized. When a specific button in the remote control device 200 is not pressed, only the pointer 205 is moved according to the upward, downward, leftward, and rightward movements of the remote control device 200.

On the other hand, the moving speed or moving direction of the pointer 205 may correspond to the moving speed or moving direction of the remote control device 200.

On the other hand, a pointer in this specification means an object displayed on the display 180 in response to an operation of the remote control device 200. Therefore, in addition to the arrow form displayed as the pointer 205 in the drawing, various forms of objects are possible. For example, the above concept may include a point, a cursor, a prompt, and a thick outline. In addition, the pointer 205 may be displayed in correspondence to one point on a horizontal axis and a vertical axis on the display 180, and may also be displayed in correspondence to a plurality of points such as a line and a surface.

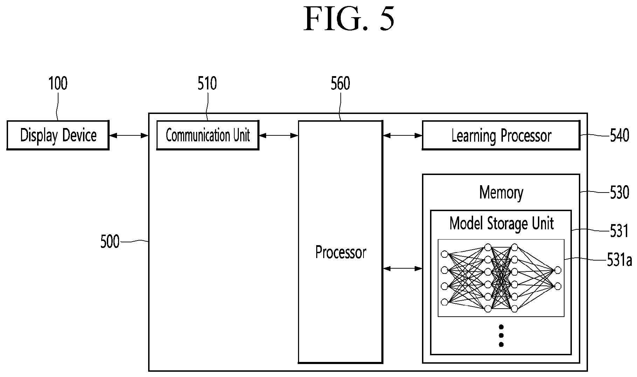

FIG. 5 is a view illustrating an Artificial Intelligence (AI) server according to an embodiment of the present disclosure.

Referring to FIG. 5, the Al server 500 may refer to a device that trains an artificial neural network using a machine learning algorithm or uses a trained artificial neural network.

The Al server 500 may be configured with a plurality of servers to perform distributed processing, and may be defined as a 5G network.

The Al server 500 may be included as a part of the Al device 100 to perform at least part of Al processing together.

The Al server 500 may include a communication unit 510, a memory 530, a learning processor 540, and a processor 560.

The communication unit 510 may transmit and receive data to and from an external device such as the display device 100.

The memory 530 may include a model storage unit 531.

The model storage unit 531 may store a model (or an artificial neural network, 531a) that is being trained or has been trained through the learning processor 540.

The learning processor 540 may train the artificial neural network 531a using training data. The trained model may be used while mounted on the Al server 500 of the artificial neural network, or may be mounted on an external device such as the display device 100 and used.

The trained model may be implemented in hardware, software, or a combination of hardware and software. When part or all of the trained model is implemented in software, one or more instructions constituting the trained model may be stored in the memory 530.

The processor 560 may infer a result value for new input data using the trained model, and may generate a response or a control command based on the inferred result value.

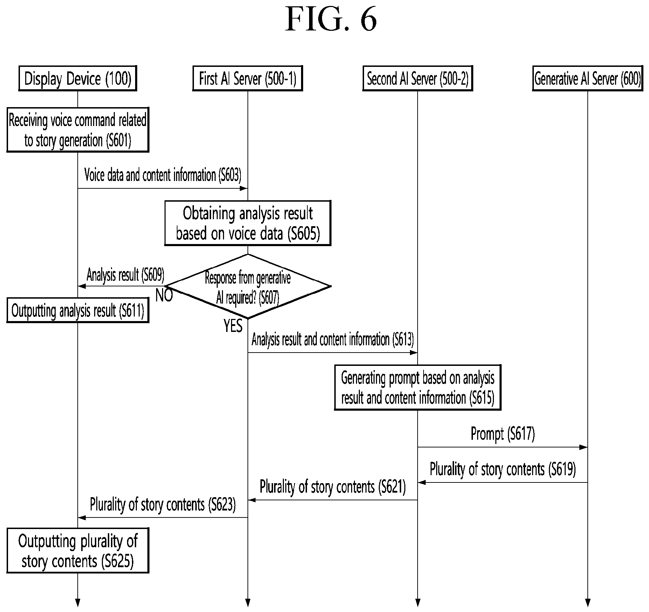

FIG. 6 is a ladder diagram for describing an operation method of an Al system according to an embodiment of the present disclosure.

Referring to FIG. 6, the Al system may include the display device 100, a first Al server 500-1, a second AI server 500-2, and a generative Al server 610.

The first Al server 500-1 may be a Natural Language Processing (NLP) server that processes natural language to obtain an analysis result of a voice command.

The second Al server 500-2 may be an Al agent server capable of obtaining a response result from the generative Al server and providing a search service.

Each of the first Al server 500-1 and the second Al server 500-2 may include the components of FIG. 5.

The first Al server 500-1 and the second Al server 500-2 may be configured as a single server.

The controller 170 of the display device 100 may receive a voice command related to story generation (S601).

In one embodiment, the controller 170 may receive a voice command uttered by a user through a microphone (not illustrated).

The controller 170 may receive a voice command from the remote control device 200. The remote control device 200 may receive a voice command uttered by a user and transmit the voice command to the display device 100.

The voice command uttered by the user may be a command indicating an intent to predict the story of content.

The controller 170 may receive a voice command related to story generation while playing content on the display 180.

The content may be any one of a drama video, a sports video, a photo, and an image.

Although a voice command is described as an example in the present disclosure, the present disclosure is not limited thereto, and a text input may be received from the remote control device 200 instead of a voice command. In this case, the text input may be transmitted to the first Al server 500-1.

**The controller 170 of the display device 100 may transmit, to the first AI server 500-1 through the network interface 133, voice data corresponding to the voice command and content information for the content being watched (S603).**

The content information may include content identification information for identifying the content. The content identification information may include a content ID.

The content information may further include one or more of a title of the content, episode information, a plot of the current episode or plots of previous episodes, character information, next-episode preview images, and key scene images representing key scenes of previous episodes, in addition to the content identification information. For example, when the content is a drama video, the title of the content may be the title of the drama, and the episode information may be the episode number of the drama.

In another embodiment, the controller 170 may transmit the content information to the first Al server 500-1 separately from the voice data. For example, the controller 170 may periodically transmit content information for the content being watched by the user to the first Al server 500-1.

**The processor 560 of the first AI server 500-1 may obtain an analysis result of the voice command based on the received voice data (S605).**

In one embodiment, the processor 560 may convert voice data into text data using a Speech To Text (STT) engine stored in the memory 530.

In another embodiment, the processor 560 may transmit voice data to an STT server, and receive the converted text data from the STT server.

The processor 560 may obtain an analysis result of the text data by using a Natural Language Processing (NLP) engine on the converted text data.

The analysis result may include an analysis result of the intent of the voice command.

For example, when the voice command is <How will the next episode unfold>, the analysis result may be a request to provide information on the story (or plot) of the next episode of the content.

**The processor 560 of the AI server 500 may determine whether a response from the generative AI is required based on the analysis result of the voice command (S607).**

In one embodiment, the processor 560 may determine whether a response from the generative Al is required based on the analysis result of the voice command.

When the analysis result of the voice command indicates an intent to control a function of the display device 100, the processor 560 may determine that a response from the generative Al is not required.

When the analysis result of the voice command does not indicate an intent to control a function of the display device 100, the processor 560 may determine that a response from the generative Al is required.

When the analysis result of the voice command does not indicate an intent to control a function of the display device 100, the processor 560 may determine that a response from the generative Al server 600 is required.

For example, when the intent of the voice command is function control of the display device 100 such as screen brightness and volume control of the display device 100, the processor 560 may determine that a response from the generative Al is not required. This is because this is a function that the display device 100 can handle on its own without the help of the generative Al.

When the intent of the voice command is story prediction for the next episode of the content currently being watched, the processor 560 may determine that a response from the generative Al is required. This is because this is a function that is difficult for the display device 100 to handle on its own without the help of the generative Al.

**When it is determined that a response from the generative AI is not required, the processor 560 of the AI server 500 may transmit the analysis result to the display device 100 through the communication unit 510 (S609).**

The processor 560 may transmit the analysis result and a search result corresponding to the intent analysis result to the display device 100 through the communication unit 510.

The processor 560 may transmit, to the display device 100 through the communication unit 510, only one of the analysis result corresponding to the intent analysis result or the search result.

The controller 170 of the display device 100 may output the received analysis result (S611).

The controller 170 may display, on the display 180, a search result included in the analysis result.

The controller 170 may control the corresponding function according to a function control command of the display device 100 included in the analysis result.

**When the processor 560 of the first AI server 500-1 determines that a response from the generative AI is required, the processor 560 may transmit the analysis result of the voice command and the content information to the second AI server 500-2 (S613).**

The processor 560 of the first Al server 500-1 may transmit the analysis result of the voice command and the content information to the second Al server 500-2 through the communication unit 510 for generating a prompt.

**The processor 560 of the second AI server 500-2 may generate a prompt for generating story content based on the received analysis result and the content information (S615).**

The second Al server 500-2 may be a server for generating a prompt to be input to the generative Al model.

The processor 560 of the second Al server 500-2 may generate a prompt based on the analysis result of the voice command, which is <next-episode story prediction request for the content>, and the content information, which is <title of the content (A), next-episode preview images extracted from the preview video for the next episode, and key scene images representing key scenes of the current or previous episodes>.

The processor 560 of the second Al server 500-2 may generate a prompt for story prediction based on the analysis result of the voice command and the story information of the content.

The processor 560 of the second Al server 500-2 may obtain the story information using the title of the content, the next-episode preview images extracted from the preview video for the next episode, and the key scene images representing key scenes of previous episodes.

The processor 560 of the second Al server 500-2 may analyze the situation of each of the next-episode preview images and generate first situation text representing the analyzed situations.

For this, the processor 560 of the second Al server 500-2 may use a video analysis model trained by artificial intelligence. The video analysis model may be an artificial neural network-based model that infers the situation of an image from the image.

The processor 560 of the second Al server 500-2 may analyze the situation of each of the key scene images and convert them into second situation text representing the analyzed situations.

The processor 560 of the second Al server 500-2 may generate a prompt including the analysis result of the voice command, the first situation text, and the second situation text.

For example, the processor 560 of the second Al server 500-2 may generate a prompt representing a first instruction such as <Generate the next-episode story of drama A using the first situation text and the second situation text, the first situation text is ~~ and the second situation text is ~~>.

The processor 560 of the second Al server 500-2 may transmit the generated prompt to the generative Al server 600.

As another example, the processor 560 of the second Al server 500-2 may generate a prompt representing a second instruction such as <Generate the next-episode story of drama A using the next-episode preview images and the key scene images of drama A>.

The processor 560 of the second Al server 500-2 may generate a prompt representing a second instruction such as <Generate the next-episode story of drama A using the next-episode preview images of drama A and the stories of previous episodes>.

The prompt may include text and images.

As one example, the prompt may include the second instruction, the next-episode preview images of drama A, and the key scene images.

As another example, the prompt may include a third instruction, the next-episode preview images of drama A, and the key scene images.

As another example, the prompt may include a third instruction, the next-episode preview images of drama A, the key scene images, and the stories of the current or previous episodes composed of text.

The processor 560 of the second Al server 500-2 may generate various types of prompts based on the analysis result of the voice command and the content information.

The processor 560 of the second Al server 500-2 may transmit the generated prompt to the first Al server 500-1, and the first Al server 500-1 may transmit the prompt to the display device 100.

The display device 100 may display the prompt on the display 180.

**The processor 560 of the second AI server 500-2 may transmit the generated prompt to the generative AI server 600 through the communication unit 510 (S617).**

The processor 560 of the second Al server 500-2 may transmit one or more of the next-episode preview images, the story of the current episode, the stories of previous episodes, and the key scene images to the generative Al server 600 in addition to the prompt.

The processor 560 of the second Al server 500-2 may transmit the prompt and the content information to the generative Al server 600.

**The generative AI server 600 may generate a plurality of story contents based on the received prompt, and transmit the generated plurality of story contents to the second AI server 500-2 (S619).**

The generative Al server 600 may include one or more generative Al models.

The generative Al model may be an artificial intelligence-based model trained by deep learning or machine learning, which takes a prompt as input and outputs a response result.

The generative Al model may be a model that generates one or more of text or video using a prompt as input.

The generative Al model may be a model trained using deep learning architectures such as a transformer model using a recurrent neural network (RNN) and an attention mechanism through large-scale text data.

Data for training the generative Al model may be collected from the web or various text sources.

The generative Al model may generate one or more of a plurality of story images or a plurality of story videos representing the next-episode story of the content, using a prompt as input. The generative Al model may generate a video as a response to the prompt using a Generative Adversarial Network (GAN).

The generative Al model may take the received prompt as input and output one or more story contents representing the next-episode story of the content.

The story content may be text, images, or a video representing the next-episode story.

**The processor 560 of the second AI server 500-2 may transmit the received plurality of story contents to the first AI server 500-1 through the communication unit 510 (S621).**

In one embodiment, the second Al server 500-2 may obtain story content not based on the user's voice command. That is, the second Al server 500-2 may store pre-generated story content that has been most frequently selected by a plurality of viewers.

The second Al server 500-2 may transmit, to the first Al server 500-1, the pre-generated story content that has been most frequently selected by a plurality of viewers, in addition to the plurality of story contents received from the generative Al server 600.

**The processor 560 of the first AI server 500-1 may transmit the received plurality of story contents to the display device 100 through the communication unit 510 (S623).**

**The controller 170 of the display device 100 may output the received plurality of story contents (S625).**

The controller 170 may display the plurality of story contents on the display 180.

The controller 170 may display the content being watched by the user and the plurality of story contents on the display 180.

The controller 170 may store, in the memory 140 or a database, a story selected by a user request from among the plurality of story contents.

The controller 170 may store, in the memory 140 or a database, one or more story contents based on user feedback from among the plurality of story contents.

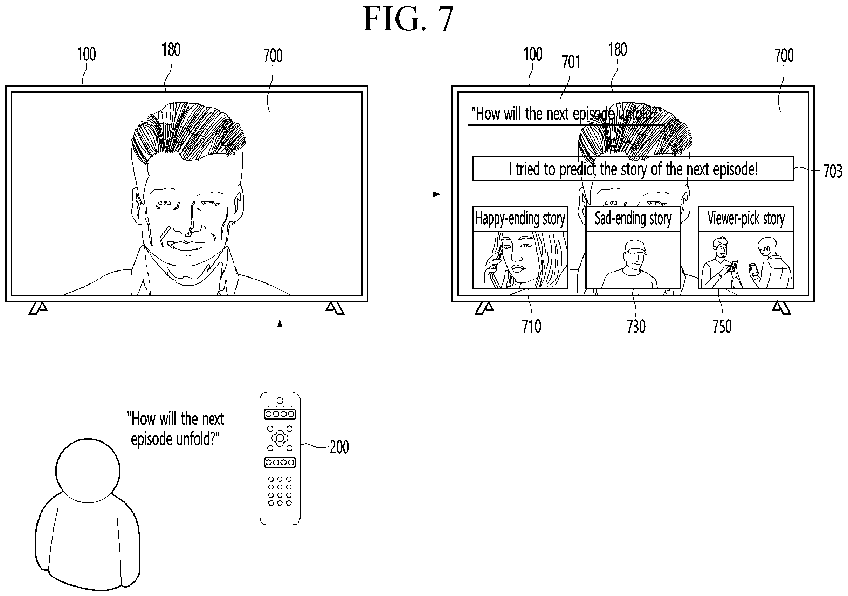

FIG. 7 is a view for describing a process of generating a next-episode story of content being watched by a user according to an embodiment of the present disclosure.

In the following, FIG. 7 is described with reference to the description of FIG. 6.

Referring to FIG. 7, the display device 100 is playing a content video 700.

The user may press the microphone button provided on the remote control device 200 and utter a voice command <How will the next episode unfold>.

The remote control device 200 may transmit the received voice command to the display device 100.

The display device 100 may transmit voice data corresponding to the voice command and content information to the first Al server 500-1 through the network interface 133.

The first Al server 500-1 may convert the voice data into text data, and may obtain an analysis result of the converted text data using a natural language processing engine.

The first Al server 500-1 may transmit the analysis result of the text data and the content information to the second Al server 500-2. The second Al server 500-2 may generate a prompt based on the analysis result and the content information, and may transmit the generated prompt to the generative Al server 600.

The generative Al server 600 may generate a plurality of story contents based on the prompt, and transmit the generated plurality of story contents to the second Al server 500-2.

The second Al server 500-2 may transmit the plurality of story contents to the first Al server 500-1. The first Al server 500-1 may transmit the received plurality of story contents to the display device 100.

As another example, the second Al server 500-2 may directly transmit the plurality of story contents to the display device 100.

The display device 100 may display, on the display 180, a plurality of story contents (710, 730, 750) representing the story of the next episode of the content currently being watched.

Each story content may be a plurality of story images or a story video.

The first story content 710 may be content representing a happy-ending story.

The second story content 730 may be content representing a sad-ending story.

The third story content 750 may be content representing a viewer-pick story selected by the most viewers.

The first story content 710 and the second story content 730 may be content generated based on the voice command uttered by the user.

The third story content 750 may be content most frequently selected or shared by a plurality of viewers by the second Al server 500-2.

The display device 100 may store, in the memory 140 or an external database, the story content selected according to user selection from among the plurality of story contents.

The display device 100 may store, in the memory 140 or an external database, story content with a good response based on user feedback obtained during playback of each of the plurality of story contents (710, 730, 750).

When playing each of the plurality of story contents (710, 730, 750), the display device 100 may obtain an utterance from the user, and when the analysis result of the obtained utterance indicates a positive response, may store the corresponding story content in the memory 140 or an external database.

As described above, according to an embodiment of the present disclosure, a user can be provided with next-episode stories of content being watched with a simple utterance alone. Accordingly, the user can be provided with a broader range of next-episode story information, so that the user experience can be greatly enhanced.

On the other hand, the display device 100 may further display, on the display 180, text 701 corresponding to the voice command uttered by the user and a notification 703 indicating that next-episode story prediction has been performed.

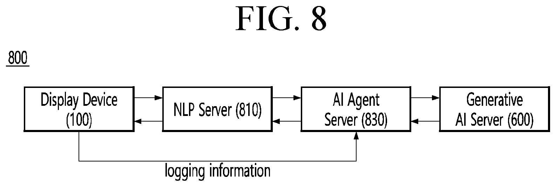

FIG. 8 is a view for describing a configuration of an artificial intelligence system according to an embodiment of the present disclosure.

Referring to FIG. 8, an artificial intelligence system 800 according to an embodiment of the present disclosure may include a display device 100, an NLP server 810, an Al agent server 830, and a generative Al server 600.

The NLP server 810 may be the first Al server 500-1 of FIG. 6.

The Al agent server 830 may be the second Al server 500-2 of FIG. 6.

The display device 100 may transmit logging information to the second Al server 500-2.

The logging information may include information indicating which story content was selected according to a user request from among the plurality of story contents illustrated in FIG. 7. That is, the logging information may include identification information of the story content.

The Al agent server 830 may identify the story content most frequently selected by viewers based on the received logging information.

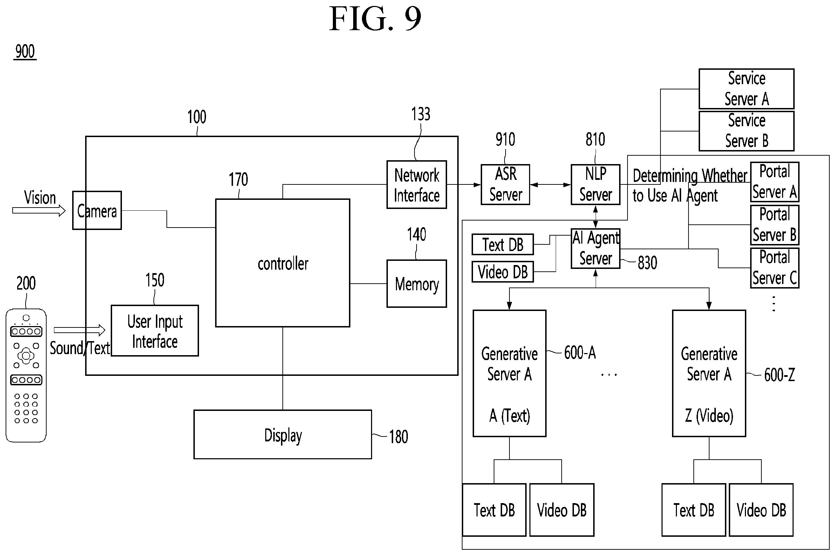

FIG. 9 is a view for describing a detailed structure of an artificial intelligence system according to another embodiment of the present disclosure.

Referring to FIG. 9, an artificial intelligence system 900 may include the display device 100, an ASR (Automatic Speech Recognition) server 910, an NLP server 810, an Al agent server 830, a plurality of Al super-large generative servers (600-A to 600-Z), a plurality of service servers, and a plurality of portal servers.

The display device 100 may receive vision data through a camera provided therein.

The display device 100 may receive voice data corresponding to a voice command uttered by a user or a text input from the remote control device 200 through the user input interface 150.

The display device 100 may transmit voice data corresponding to the voice command and content information to the ASR server 910 through the network interface 133.

The content information may include one or more of a title of the content, a plot of the current episode, plots of previous episodes, next-episode preview images extracted from the preview video for the next episode, and key scene images representing key scenes of the current or previous episodes.

The ASR server 910 may convert voice data into text data. The ASR server 910 may be an STT server.

The NLP server 810 may receive the text data converted from the ASR server 910.

The NLP server 810 may obtain an analysis result of the voice command from the text data. The NLP server 810 may determine whether to use the Al agent server 830 based on the obtained analysis result.

The NLP server 810 may determine that the use of the Al agent server 830 is required when the obtained analysis result is determined to require a response from the generative Al model.

The NLP server 810 may determine that the use of the Al agent server 830 is not necessary when the obtained analysis result is determined to not require a response from the generative Al model.

When the analysis result indicates a content search intent, the NLP server 810 may transmit a content search request to a service server or portal server. The NLP server 810 may receive a content search result from the service server or portal server in response to the content search request.

The service server may be a content provider server, and the portal server may be a web server providing a website.

The NLP server 810 may transmit the analysis result and the content information to the Al agent server 830.

The Al agent server 830 may generate a prompt based on the analysis result and the content information.

The Al agent server 830 may extract story information of the content based on the content information.

The Al agent server 830 may extract, from the next-episode preview images included in the content information, first situation text representing the situation of the preview images.

The Al agent server 830 may extract, from the key scene images included in the content information, second situation text representing the situation of the key scene images.

The Al agent server 830 may generate story information of the content by combining the first situation text and the second situation text.

The Al agent server 830 may generate a prompt requesting generation of a next-episode story based on the analysis result of the voice command and the story information of the content.

For example, the prompt may have a format such as <Generate the next-episode story of the drama based on the following story information, the story information is ~~~>.

The Al agent server 830 may store the generated prompt in a text DB.

The Al agent server 830 may transmit the generated prompt to one or more generative Al servers from among the plurality of generative Al servers (600-A to 600-Z).

Any one of the plurality of generative Al servers (600-A to 600-Z) may generate a story in text form.

Any one of the plurality of generative Al servers (600-A to 600-Z) may generate a story in image form.

Any one of the plurality of generative Al servers (600-A to 600-Z) may generate a story in video form.

The generative Al server may include a generative Al model that generates an image or a video using a text-format prompt as input.

Each generative Al server may store a text-format response result for the prompt in a text DB, and may store a video-format response result for the prompt in a video DB.

The generative Al server may generate story content representing the next-episode story of the content, using the received prompt as input.

A plurality of story contents generated through one or more generative Al servers may be transmitted to the Al agent server 830.

The Al agent server 830 may store the plurality of story contents in a video DB.

The Al agent server 830 may transmit the plurality of story contents to the NLP server 810, and the NLP server 810 may transmit the received plurality of story contents to the display device 100.

The display device 100 may display the received plurality of story contents on the display 180.

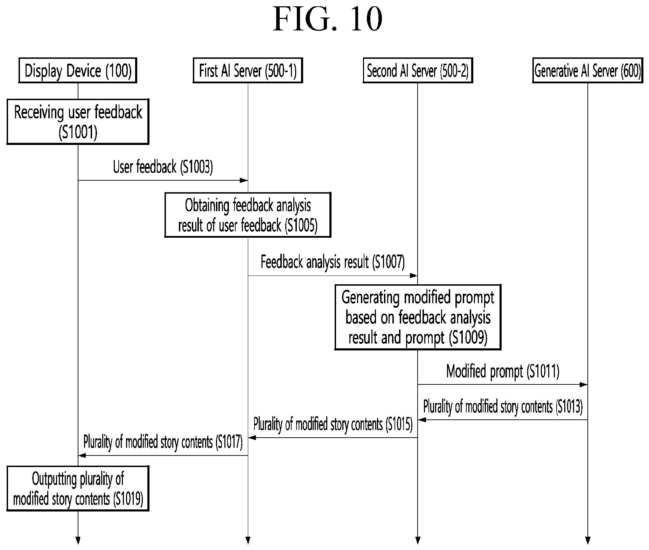

FIG. 10 is a ladder diagram for describing a process of providing modified story content as user feedback is received after FIG. 6.

FIG. 10 is an embodiment performed after step S625 of FIG. 6.

Referring to FIG. 10, **the controller 170 of the display device 100 may receive user feedback through the user input interface 155 while outputting the plurality of story contents (S1001).**

The user feedback may be feedback for editing one or more stories from among the plurality of story contents.

The user feedback may be any one of a voice command or a text input.

The user feedback may be feedback requesting a change in the characters or plot of the story content.

**The controller 170 of the display device 100 may transmit the received user feedback to the first AI server 500-1 through the network interface 133 (S1003).**

**The first AI server 500-1 may obtain a feedback analysis result for the received user feedback (S1005), and may transmit the obtained feedback analysis result to the second AI server 500-2 (S1007).**

The first Al server 500-1 may obtain a feedback analysis result for the user feedback using a natural language processing engine.

**The processor 560 of the second AI server 500-2 may generate a modified prompt based on the feedback analysis result and the previously generated prompt (S1009).**

The processor 560 of the second Al server 500-2 may generate a modified prompt based on the feedback analysis result and the prompt previously generated in step S615.

For example, when the feedback analysis result is a request to change character A of the story content to character B, the modified prompt may be <Change character A to B, and generate the next-episode story of drama A using the first situation text and the second situation text, the first situation text is ~~ and the second situation text is ~~>.

**The processor 560 of the second AI server 500-2 transmits the generated modified prompt to the generative AI server 600 through the communication unit 510 (S1011), and receives a plurality of modified story contents from the generative AI server 600 (S1013).**

The generative Al server may generate a plurality of modified story contents based on the modified prompt.

**The processor 560 of the second AI server 500-2 may transmit the plurality of modified story contents to the first AI server 500-1 (S1015).**

**The first AI server 500-1 may transmit the received plurality of modified story contents to the display device 100 (S1017).**

**The display device 100 may output the plurality of modified story contents (S1019).**

As described above, according to an embodiment of the present disclosure, a user can be provided with content having a story in a desired direction with a simple feedback utterance alone, so that the user experience can be greatly enhanced.

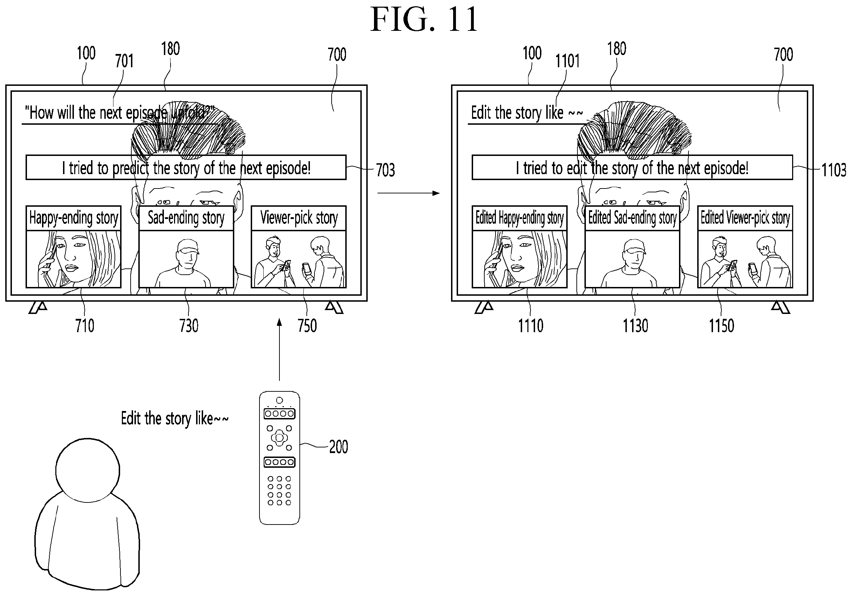

FIG. 11 is an embodiment for describing a process of providing modified story content according to user feedback.

Referring to FIG. 11, the display device 100 is displaying the plurality of story contents (710, 730, 750).

The user may press the microphone button provided on the remote control device 200 and utter a feedback voice <Edit the story like ~~>.

The remote control device 200 may transmit the received feedback voice to the display device 100.

The display device 100 may transmit feedback voice data corresponding to the feedback voice to the first Al server 500-1 through the network interface 133.

The first Al server 500-1 may convert the feedback voice data into text data, and may obtain a feedback analysis result of the converted text data using a natural language processing engine.

The first Al server 500-1 may transmit the feedback analysis result to the second Al server 500-2. The second Al server 500-2 may generate a modified prompt based on the feedback analysis result and the previously generated prompt, and may transmit the generated modified prompt to the generative Al server 600.

The generative Al server 600 may generate a plurality of modified story contents based on the modified prompt, and transmit the generated plurality of modified story contents to the second Al server 500-2.

The second Al server 500-2 may transmit the plurality of modified story contents to the first Al server 500-1. The first Al server 500-1 may transmit the received plurality of modified story contents to the display device 100.

As another example, the second Al server 500-2 may directly transmit the plurality of modified story contents to the display device 100.

The display device 100 may display the plurality of modified story contents (1110, 1130, 1150) on the display 180.

As described above, according to an embodiment of the present disclosure, a user can be provided with content having a story in a desired direction with a simple feedback utterance alone, so that the user experience can be greatly enhanced.

According to one embodiment of the present disclosure, the above-described method can be implemented as processor-readable code on a medium on which a program is recorded. Examples of processor-readable media include ROM, RAM, CD-ROM, magnetic tape, floppy disk, and optical data storage devices.

The display device described above is not limited to the configurations and methods of the described embodiments, but all or part of each embodiment may be selectively combined to configure various modifications.

## Claims

1. An artificial intelligence system, comprising:
a display device configured to receive a user input during playback of content, and to transmit the received user input and content information for the content to a first Artificial Intelligence (AI) server;
the first Al server configured to obtain an analysis result of the user input, and to transmit the obtained analysis result and the content information to a second AI server; and
a second AI server configured to generate a prompt based on the analysis result and the content information, to transmit the generated prompt to a generative Al server, to receive a plurality of story contents from the generative Al server, and to transmit the received plurality of story contents to the first Al server,
wherein the first Al server is configured to transmit the plurality of story contents to the display device, and
the display device is configured to output the plurality of story contents.

2. The artificial intelligence system of claim 1, wherein the content information includes one or more of a plot of a current episode of the content, a plot of a previous episode of the content, preview images representing a preview of a next episode of the content, and key scene images representing key scenes of the current episode or the previous episode.

3. The artificial intelligence system of claim 2, wherein the second Al server is configured to:
obtain, from the preview images, first situation text representing the situation of the next-episode preview, and second situation text representing the situation of the key scene images from the key scene images; and
generate the prompt requesting generation of a next-episode story of the content based on the analysis result, the first situation text, and the second situation text.

4. The artificial intelligence system of claim 1, wherein the display device is configured to:
display the plurality of story contents on a display; and
store, in a memory, story content selected according to user selection from among the plurality of story contents.

5. The artificial intelligence system of claim 1, wherein:
the display device is configured to receive user feedback and to transmit the received user feedback to the first Al server;
the first Al server is configured to obtain a feedback analysis result for the user feedback and to transmit the obtained feedback analysis result to the second Al server; and
the second Al server is configured to generate a modified prompt based on the feedback analysis result and the prompt, and to transmit the generated modified prompt to the generative Al server.

6. The artificial intelligence system of claim 5, wherein the feedback analysis result includes an intent requesting a change in a story or characters of the plurality of story contents.

7. The artificial intelligence system of claim 6, wherein:
the second Al server is configured to receive a plurality of modified story contents from the generative Al server and to transmit the received plurality of modified story contents to the first Al server;
the first Al server is configured to transmit the plurality of modified story contents to the display device; and
the display device is configured to display the plurality of modified story contents.

8. An operation method of an artificial intelligence system, comprising:
receiving, by a display device, a user input during playback of content;
transmitting, by the display device, the received user input and content information for the content to a first Artificial Intelligence (AI) server;
obtaining, by the first Al server, an analysis result of the user input;
transmitting, by the first Al server, the obtained analysis result and the content information to a second AI server;
generating, by the second Al server, a prompt based on the analysis result and the content information;
transmitting, by the second Al server, the generated prompt to a generative Al server;
receiving, by the second Al server, a plurality of story contents from the generative Al server;
transmitting, by the second Al server, the received plurality of story contents to the first Al server;
transmitting, by the first Al server, the plurality of story contents to the display device; and
outputting, by the display device, the plurality of story contents.

9. The operation method of the artificial intelligence system of claim 8, wherein the content information includes one or more of a plot of a current episode of the content, a plot of a previous episode of the content, preview images representing a preview of a next episode of the content, and key scene images representing key scenes of the current episode or the previous episode.

10. The operation method of the artificial intelligence system of claim 9, further comprising:
obtaining, by the second Al server, from the preview images, first situation text representing the situation of the next-episode preview and, from the key scene images, second situation text representing the situation of the key scene images,
wherein the generating of the prompt comprises generating the prompt requesting generation of a next-episode story of the content based on the analysis result, the first situation text, and the second situation text.

11. The operation method of the artificial intelligence system of claim 8, wherein the outputting comprises displaying, by the display device, the plurality of story contents on a display, and
the operation method further comprises storing, in a memory, story content selected according to user selection from among the plurality of story contents.

12. The operation method of the artificial intelligence system of claim 8, further comprising:
receiving, by the display device, user feedback;
transmitting, by the display device, the received user feedback to the first Al server;
obtaining, by the first Al server, a feedback analysis result for the user feedback;
transmitting, by the first Al server, the obtained feedback analysis result to the second Al server;
generating, by the second Al server, a modified prompt based on the feedback analysis result and the prompt; and
transmitting, by the second Al server, the generated modified prompt to the generative Al server.

13. The operation method of the artificial intelligence system of claim 12, wherein the feedback analysis result includes an intent requesting a change in a story or characters of the plurality of story contents.

14. The operation method of the artificial intelligence system of claim 13, further comprising:
receiving, by the second Al server, a plurality of modified story contents from the generative Al server;
transmitting, by the second Al server, the received plurality of modified story contents to the first Al server;
transmitting, by the first Al server, the plurality of modified story contents to the display device; and
displaying, by the display device, the plurality of modified story contents.
